# EUROPEAN PATENT APPLICATION

(11) **EP 4 336 426 A1**
(43) Date of publication of application: **13.03.2024**
(21) Application number: 23191222.1
(22) Date of filing: 13.08.2023
(51) Int. Cl.: G06Q 10/04, G06Q 10/0631, G06Q 50/02

(54) **FLEET SIZE AND DISPATCH SCHEME OPTIMIZATION**

(30) Priority: 08.09.2022 US 202217930444
(71) Applicant: Caterpillar, Inc., Peoria, IL 61629-6450 (US)
(72) Inventor: SELVARAJ, Vishnu, 620005 Trichy (IN); RAJENDRAN, Duraivel, 622256 Chennai (IN); RAMAMOORTHY, Kavitharani, 628502 Kovilpatti (IN); GANESH, Mugesh, 600117 Chennai (IN); SELVARAJ, Nigitha, 641004 Coimbatore (IN)
(74) Representative: Boult Wade Tennant LLP

(57) **Abstract**

A job at a worksite (106) can be performed by different numbers of machines (104), and machines (104) can be deployed to perform the job according to different dispatch schemes. A computing system (102) can use job design data (112) and other job parameters (114) associated with the j ob to determine projected job performance times and costs associated with different combinations of candidate fleet sizes and candidate dispatch schemes. The computing system (102) can identify a particular fleet size and dispatch scheme combination, among the possible fleet size and dispatch scheme combinations, that is associated with a projected job performance time and a projected job cost that best satisfies a time-cost goal (110) for the job.

## Description

### Technical Field

The present disclosure relates to management of a fleet of machines at a worksite and, more particularly, to determining an optimal number of machines to deploy at the worksite and an optimal dispatch scheme for deploying the machines to perform tasks at the worksite.

### Background

Performance of a job on a worksite can involve one or more machines traveling around the worksite to perform tasks, such as deliveries of material to various locations at the worksite. Such machines may be autonomous machines that travel and/or perform tasks automatically, based on routes determined by the autonomous machines and/or a central computing system that manages the autonomous machines.

Various systems have been developed to automatically determine routes for machines. However, such systems generally do not determine how many machines should be deployed to perform a job on a worksite, based on identifying a number of machines that is most likely to meet overall time and/or cost goals associated with the job. Such systems generally also do not determine a particular dispatch scheme, indicating how and/or when to dispatch machines to perform tasks associated with the job, that is most likely to meet the overall time and/or cost goals associated with the job.

For example, U.S. Patent No. 8,386,110 to Maekawa et al. (hereinafter "Maekawa") describes a method for generating a travel route for an unmanned vehicle on a worksite. The method described by Maekawa can determine a travel route for the unmanned vehicle that minimizes a traveling cost of the unmanned vehicle. However, the method described by Maekawa is limited to minimizing a travel cost associated with a single unmanned vehicle, and does not determine an overall number of vehicles that should be deployed on the worksite. Additionally, because the method described by Maekawa minimizes a travel cost associated with a single unmanned vehicle, the method described by Maekawa may not generate travel routes for multiple vehicles, and may not determine travel routes or dispatch strategies for one or more vehicles based on both time and cost goals for the worksite and/or a particular job at the worksite.

The example systems and methods described herein are directed toward overcoming one or more of the deficiencies described above.

### Summary

According to a first aspect, a method includes determining, by a processor, a time-cost goal for a job at a worksite. Performance of the job is associated with one or more machines delivering material to a plurality of drop points at the worksite. The method also includes determining, by the processor, job parameters associated with the job. The job parameters indicate locations of the plurality of drop points at the worksite, candidate fleet sizes indicating numbers of machines, and candidate dispatch schemes for deploying the one or more machines to deliver the material to the plurality of drop points. The method further includes determining, by the processor, projected job performance times and projected job performance costs associated with different combinations of the candidate fleet sizes and the candidate dispatch schemes. The method also includes identifying, by the processor, and from among the different combinations of the candidate fleet sizes and the candidate dispatch schemes, a particular combination of a fleet size and a dispatch scheme that is associated with a projected job performance time and a projected job performance cost that is closest to satisfying the time-cost goal. The method additionally includes determining, by the processor, a fleet size selection and a dispatch scheme selection that respectively indicate the fleet size and the dispatch scheme associated with the particular combination of the fleet size and the dispatch scheme.

According to a second aspect, a computing system includes a processor and a memory. The memory stores computer-executable instructions that, when executed by the processor, cause the processor to determine a time-cost goal for a job at a worksite. Performance of the job is associated with one or more machines delivering material to a plurality of drop points at the worksite. The computer-executable instructions also cause the processor to determine job parameters associated with the job. The job parameters indicate locations of the plurality of drop points at the worksite, candidate fleet sizes indicating numbers of machines, and candidate dispatch schemes for deploying the one or more machines to deliver the material to the plurality of drop points. The computer-executable instructions also cause the processor to, for individual combinations of the candidate fleet sizes and the candidate dispatch schemes, determine routes, for a set of machines corresponding to a particular candidate fleet size, between a staging area and the plurality of drop points, based on a particular candidate dispatch scheme. The computer-executable instructions additionally cause the processor to, for the individual combinations, generate simulated machine operations associated with individual machines, of the set of machines, in association with the routes, determine a job performance time by determining a total time for the set of machines to perform the simulated machine operations, and determine a job performance cost by determining a total cost for the set of machines to perform the simulated machine operations. The computer-executable instructions also further cause the processor to identify a particular combination of a fleet size and a dispatch scheme that is associated with the job performance time and the job performance cost that is closest to satisfying the time-cost goal.

According to a third aspect, a non-transitory computer-readable media stores computer-executable instructions. The computer-executable instructions, when executed by a processor, cause the processor to determine a time-cost goal for a job at a worksite. Performance of the job is associated with one or more machines delivering material to a plurality of drop points at the worksite. The computer-executable instructions also cause the one or more processors to determine job parameters associated with the job. The job parameters indicate locations of the plurality of drop points at the worksite, candidate fleet sizes indicating numbers of machines, and candidate dispatch schemes for deploying the one or more machines to deliver the material to the plurality of drop points. The computer-executable instructions further cause the one or more processors to, for individual combinations of the candidate fleet sizes and the candidate dispatch schemes, determine routes, for a set of machines corresponding to a particular candidate fleet size, between a staging area and the plurality of drop points, based on a particular candidate dispatch scheme. The computer-executable instructions additionally cause the one or more processors to, for the individual combinations, generate simulated machine operations associated with individual machines, of the set of machines, in association with the routes, determine a job performance time by determining a total time for the set of machines to perform the simulated machine operations, and determine a job performance cost by determining a total cost for the set of machines to perform the simulated machine operations. The computer-executable instructions also cause the one or more processors to identify a particular combination of a fleet size and a dispatch scheme that is associated with the job performance time and the job performance cost that is closest to satisfying the time-cost goal.

### Brief Description of the Drawings

The detailed description is described with reference to the accompanying figures. In the figures, the left-most digit of a reference number identifies the figure in which the reference number first appears. The same reference numbers in different figures indicate similar or identical items.
FIG. 1 shows an example of a computing system configured to select a fleet size and a dispatch scheme associated with machines at a worksite.
FIG. 2 shows a flowchart illustrating an example process for identifying a fleet size and dispatch scheme combination that best satisfies a time-cost goal associated with a job at the worksite.
FIG. 3 shows an example job completion time graph that displays job completion times associated with multiple possible fleet size and dispatch scheme combinations.
FIG. 4 shows an example job cost graph that displays job costs associated with multiple possible fleet size and dispatch scheme combinations.
FIG. 5 shows an example time-cost score graph that displays time-cost scores associated with multiple possible fleet size and dispatch scheme combinations.
FIG. 6 shows an example table that indicates, for individual candidate dispatch schemes, an optimal fleet size that leads to a lowest time-cost score for each of a set of candidate dispatch schemes.
FIG. 7 shows first example curves that show changes, for different fleet size and dispatch scheme combinations, in time and cost relative to a fleet size of one machine.
FIG. 8 shows a second example curves that show changes, for different fleet size and dispatch scheme combinations, in time and cost relative to a fleet size of one fewer machine.
FIG. 9 shows an example system architecture for the computing system.

### Detailed Description

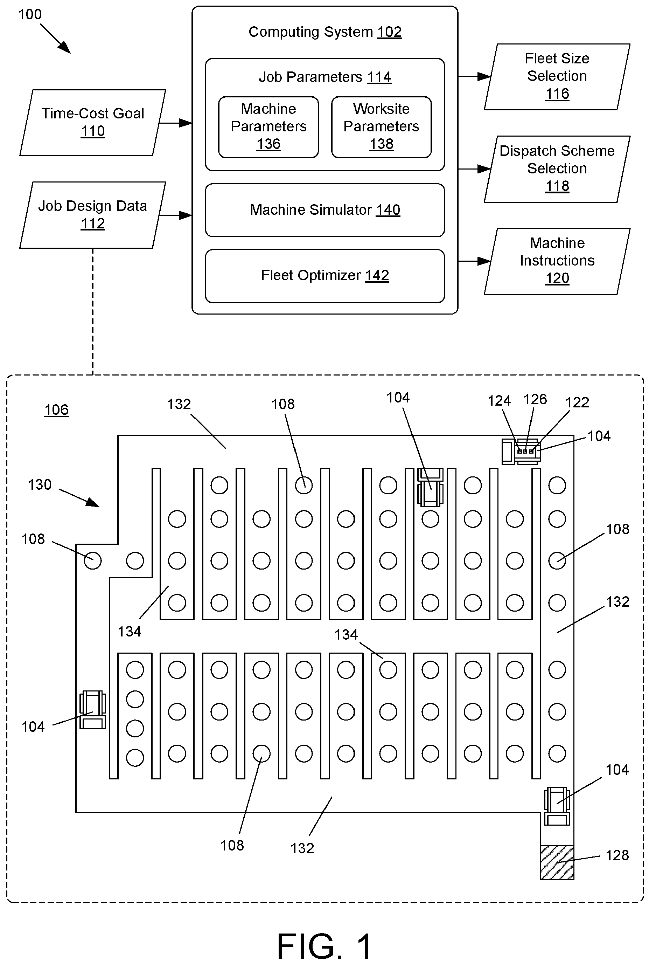

FIG. 1 shows an example 100 of a computing system 102 configured to select a fleet size and a dispatch scheme associated with machines 104 at a worksite 106. During a job at the worksite 106, a fleet of one or more machines 104 can be configured to deliver material to a set of drop points 108 at the worksite 106. For example, the worksite 106 can be a solar farm that is under construction. The drop points 108 can be locations at the worksite 106 where machines 104, such as autonomous compact track loaders (CTLs) are to deliver solar panels, solar panel installation equipment, and/or other materials.

The computing system 102 can use information associated with the job at the worksite 106, such as a time-cost goal 110, job design data 112, and/or job parameters 114, to determine a fleet size selection 116 and a dispatch scheme selection 118 associated with the job. The fleet size selection 116 can indicate a particular number of machines 104 to deploy at the worksite 106 for the job. The dispatch scheme selection 118 can indicate a particular dispatch scheme to use to dispatch the machines 104 to perform the job. The computing system 102 can determine the fleet size selection 116 and the dispatch scheme selection 118 by determining time and/or cost metrics associated with different combinations of possible fleet sizes and possible dispatch schemes, and determining which combination of the possible fleet sizes and possible dispatch schemes is likely to have time and/or cost metrics that best satisfy the time-cost goal 110 for the job.

The worksite 106 can be a construction site, a mine site, a quarry, or any other type of worksite or work environment at which material can be delivered to defined drop points 108. The machines 104 at the worksite 106 can be CTLs, skid steer loaders, track loaders, haul trucks, wheel loaders, or any other type of machine that can transport material from one location to another at the worksite 106. The material can be solar panels, construction materials, dirt, gravel, and/or any other type of material that is to be delivered to the drop points 108 at the worksite 106.

The machines 104 can be vehicles or other mobile machines that have engines, motors, drivetrains, braking systems, hydraulic components, and/or other mechanisms that can cause movement of wheels of the machines, movement of work tools and/or other elements of the machines, and/or otherwise implement operations of the machines. In some examples, one or more of the machines 104 can be fuel-powered machines that operate based on power provided by internal combustion engines and/or other elements that consume fuel. In other examples, one or more of the machines 104 can be battery electric machines (BEMs), battery electric vehicles (BEVs), hybrid vehicles, fuel cell and battery hybrid vehicles, or other mobile machines. For instance, the machines 104 can have batteries, such as lithium-ion (Li-ion) batteries, lithium-ion polymer batteries, nickel-metal hydride (NiMH) batteries, lead-acid batteries, nickel cadmium (Ni-Cd) batteries, zinc-air batteries, sodium-nickel chloride batteries, or other types of batteries that can at least partially power the machines 104.

The machines 104 can be semi-autonomous machines or fully autonomous machines that operate automatically based on machine instructions 120 generated by the computing system 102 or another computing system. For example, a machine can have an electronic control module (ECM) 122 and/or other on-board computing devices that can fully or partially control operations of the machine, such as steering, speed adjustments, work tool movements, and/or other operations. Accordingly, operations of a machine can be fully or partially controlled, automatically or semi-automatically, by on-board controllers such as the ECM 122, and/or off-board controllers such as the computing system 102. A machine can, for instance, have an on-board guidance system that can drive the machine autonomously, an obstacle detection system that assists the on-board guidance system or can alert a human operator of nearby objects detected by the obstacle detection system, and/or other systems that fully or partially control operations of the machine. As another example, the computing system 102 or another off-board computing device can receive data from a machine and return machine instructions 120 to the machine to dispatch the machine to autonomously travel along a defined and/or assigned route, or to fully or partially control operations of the machine remotely.

The machines 104 can also include sensors 124, such as cameras, LIDAR sensors, RADAR sensors, other optical sensors or perception systems, Global Positioning System (GPS) sensors, other location and/or positioning sensors, work tool position sensors, hydraulic pressure sensors, payload sensors, speed sensors, brake temperature sensors, other temperature sensors, tire pressure sensors, battery state of health (SoH) sensors, fuel sensors, incline and decline travel sensors, and/or other types of sensors. Such sensors 124 of a machine can be operable coupled to the ECM 122 and/or other on-board computing systems of the machine. The sensors 124 can also provide corresponding sensor data to the ECM 122 and/or other on-board computing systems of the machine, and/or off-board computing systems such as the computing system 102, such that the sensor data can be used to determine a location of the machine, detect nearby terrain, detect nearby objects, such as vehicles, other machines, or personnel, detect the positions of such nearby objects relative to the machine, determine a weight of a payload carried by the machine, determine a state of charge (SoC) of a battery system, determine an amount of fuel carried by the machine, and/or perform other operations. In some examples, data provided by sensors 124 of a machine can enable the ECM 122 of the machine to cause the machine to drive and/or operate autonomously or semi-autonomously.

As discussed above, the machines 104 can operate autonomously or semi-autonomously based on machine instructions 120. For example, the machine instructions 120 for a particular machine can indicate when and/or where the particular machine is to load material, which drop points 108 the machine is to deliver the material to, route segments that the machine is to traverse in a loaded or unloaded state, when the machine is to traverse such route segments, when and/or where the machine is to wait at the worksite 106 while loaded or unloaded, and/or other scheduling or routing information. The machine instructions 120 for a machine can also indicate instructions associated with machine operations that the machine is to perform at locations at the worksite 106, such as particular loading or unloading operations, or speeds the machine is to travel at during one or more segments of a cycle.

The machines 104 can have wireless communication interfaces 126 that are operably coupled to the ECMs of the machines 104, and that allow the ECMs of the machines 104 to send data to the computing system 102 and/or other off-board controllers, and to receive machine instructions 120 and other data from the computing system 102 and/or other off-board controllers. Such wireless communication interfaces 126 can include cellular interfaces, modems, receivers, transmitters, antennas, and/or other hardware or software elements configured to send and receive data, for instance to exchange data with the computing system 102 and/or other off-board controllers. The computing system 102 and/or other off-board controllers can have, or be associated with, similar wireless communication interfaces, such that the computing system 102 and/or other off-board controllers can wirelessly exchange data with the ECMs and/or other on-board computing systems of the machines 104.

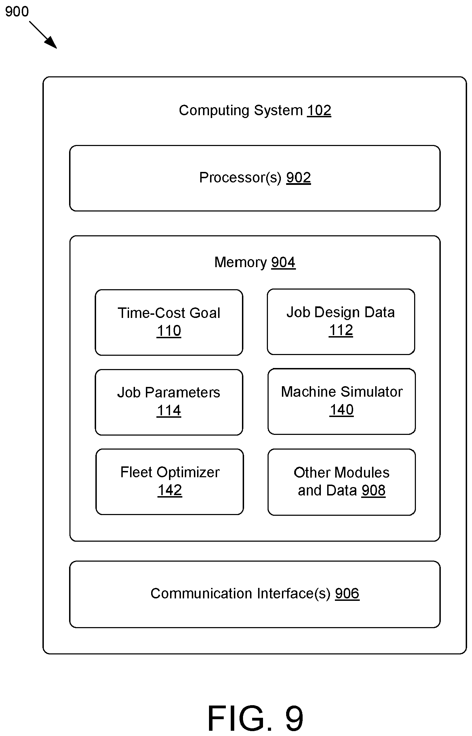

The computing system 102 can be one or more servers, computers, or other off-board computing devices that are separate from the machines 104. For example, while the machines 104 can be located at the worksite 106, the computing system 102 can be located at a back office or other location that is remote from the machines 104 at the worksite 106, or that is remote from the worksite 106 overall. The computing system 102 can be configured to determine the fleet size selection 116 and the dispatch scheme selection 118 for a job at the worksite 106, as described further below. In some examples, the computing system 102 can also generate machine instructions 120 associated with the job during determination of the fleet size selection 116 and the dispatch scheme selection 118. FIG. 9 discussed further below, describes an example system architecture for the computing system 102.

The computing system 102 can determine the fleet size selection 116 and the dispatch scheme selection 118 for a job at the worksite 106 based on information about the job. Such information about the job can include the time-cost goal 110 for the job, job design data 112 associated with the job, and/or other job parameters 114 associated with the job. For example, the computing system 102 can use the job design data 112 and/or the other job parameters 114 to evaluate multiple possible combinations of fleet sizes and dispatch schemes, and identify one of the fleet size and dispatch scheme combinations that corresponds to time metrics and/or cost metrics that best satisfies the time-cost goal 110 for the job. Based on identifying the fleet size and dispatch scheme combination that best satisfies the time-cost goal 110, the computing system 102 can indicate the corresponding fleet size in the fleet size selection 116 and the corresponding dispatch scheme in the dispatch scheme selection 118.

The time-cost goal 110 for the job can be a customer-defined goal indicating whether a customer associated with the job and/or the worksite 106 desires to prioritize completion of the job based on time metrics, cost metrics, or a balance of time metrics and cost metrics. In some examples, the time-cost goal 110 may weight time metrics and cost metrics equally by default, or based on customer input. However, customers can also adjust the time-cost goal 110 to weight time metrics more heavily than cost metrics, or to weight cost metrics more heavily than time metrics.

For example, a customer with a tight budget may prioritize completing the job at a lower cost, even if completing the job at a lower cost causes the job to be completed over a longer period of time. Accordingly, the customer can set the time-cost goal 110 to weight lower projected job completion costs more heavily than shorter projected job completion times. The computing system 102 may therefore identify a fleet size and dispatch scheme combination that can be used at a low projected cost, even if the identified fleet size and dispatch scheme combination may result in a longer projected job completion time.

As another example, a customer with a tight deadline may prioritize completing the job in a shorter amount of time, even if completing the job in that amount of time costs more than completing the job over a longer amount of time. Accordingly, the customer can set the time-cost goal 110 to weight shorter projected job completion times more heavily than lower projected job completion costs. The computing system 102 may therefore identify a fleet size and dispatch scheme combination that is projected to result in the job being completed more quickly, even if the identified fleet size and dispatch scheme combination may result in a higher projected job completion cost.

In some examples, the computing system 102 can be configured to identify a fleet size and dispatch scheme combination that is projected to minimize a time-cost score associated with performance of the job, and thus may best satisfy the overall time-cost goal 110 for the job. A time-cost score associated with a particular fleet size and dispatch scheme combination can be a normalized sum of a projected job completion time and a projected job completion cost associated with the particular fleet size and dispatch scheme combination.

For example, for a particular candidate dispatch scheme, the computing system 102 can determine projected job completion end times and projected job completion costs for each possible candidate fleet size based on the particular candidate dispatch scheme. The computing system 102 can also determine a scaled job completion end time for a particular candidate fleet size, in association with the particular candidate dispatch scheme. The scaled job completion end time can be based on a difference between the projected job completion end time for the particular candidate fleet size and a minimum job completion end time across all of the candidate fleet sizes, subtracted by a difference between the maximum and minimum job completion end times across all of the candidate fleet sizes. The computing system 102 can similarly determine a scaled job completion cost for the particular candidate fleet size, in association with the particular candidate dispatch scheme. The scaled job completion cost can be based on a difference between the projected job completion cost for the particular candidate fleet size and a minimum job completion cost across all of the candidate fleet sizes, subtracted by a difference between the maximum and minimum job completion costs across all of the candidate fleet sizes. Accordingly, the time-cost score for the particular fleet size and dispatch scheme combination can be a sum of the scaled job completion end time and the scaled job completion cost for the particular fleet size and dispatch scheme combination. The computing system 102 can determine time-cost scores for multiple fleet size and dispatch scheme combination, and thus identify the fleet size and dispatch scheme combination that has the lowest time-cost score.

In other examples, the computing system 102 can determine a change in time and cost with respect to each fleet size of *N* machines, relative to a fleet size of 1 machine. For example, for a particular dispatch scheme, the computing system 102 can determine job completion times and costs for each possible fleet size. The computing system 102 can accordingly determine a time that is reduced per dollar increase in cost, if more than one machine is used to perform the job relative to using one machine to perform the job. For example, for a particular fleet size of *N* machines, relative to using a fleet size of 1 machine, the change in the time and cost can be determined by a difference between projected job completion end times associated with using *N* machines and using 1 machine, divided by a difference between projected job completion costs associated with using *N* machines and using 1 machine.

In still other examples, the computing system 102 can determine a consecutive change in time and cost with respect to each fleet size of *N* machines, relative to a fleet size of *N*-1 machines. For example, for a particular dispatch scheme, the computing system 102 can determine job completion times and costs for each possible fleet size. The computing system 102 can accordingly determine a time that is reduced per dollar increase in cost, if *N* machines are used to perform the job relative to using *N*-1 machines to perform the job. For example, for a particular fleet size of *N* machines, relative to using a fleet size of *N*-1 machines, the change in the time and cost can be determined by a difference between projected job completion end times associated with using *N*-*1* machines and using *N* machines, divided by a difference between projected job completion costs associated with using *N* machines and using *N*-1 machines.

In some examples, the computing system 102 can determine the fleet size selection 116 based at least in part by using an elbow method analysis on curves of metrics of changes in time and cost with respect to using N machines, relative to 1 machine and/or N-1 machines. The knee points in such curves can indicate a number of machines 104 that, if exceeded, would not cause the end time and cost to vary beyond threshold variances, and thus may be a fleet size that best satisfies the time-cost goal 110. For instance, if a fleet size of five machines is the knee point in a curve of one or both metrics of changes in time and cost, a fleet size of six machines may have relatively similar time and cost projections relative to the fleet size of five machines, and the computing system 102 can select five machines as the fleet size selection 116.

The job design data 112 associated with the job can include a design file and/or other information associated with the worksite 106. For example, the job design data 112 can include a graph, site map, and/or other data indicating locations of the drop points 108 at the worksite 106, locations of at least one staging area 128 at the worksite 106, and/or locations of paths 130 at the worksite 106. The job design data 112 can also indicate boundaries of the worksite 106, terrain of the worksite 106, locations and/or identities of obstacles at the worksite 106, and/or other information associated with the worksite 106.

As discussed above, the drop points 108 can be locations at the worksite 106 that are to receive material delivered by the machines 104. The staging area 128 can be an area where the machines 104 can pick up or obtain the material, before transporting the material from the staging area 128 to the individual drop points 108. For example, if the worksite 106 is a solar farm that is under construction, delivery trucks or other machines can deliver a set of solar panels to the staging area 128. One or more machines 104, such as CTLs, can then transport individual solar panels from the staging area 128 to individual drop points 108 at or near where the solar panels will be installed. In some examples, there may be more than one staging area 128 at the worksite 106.

The paths 130 can be roads, passable routes, and/or other pathways through the worksite 106. For example, the paths can extend from the staging area 128 and the drop points 108, such that machines 104 can navigate the paths 130 to deliver material from the staging area 128 to the drop points 108. The drop points 108 can be located on or near the paths 130.

In some examples, the paths 130 can include main paths 132 and/or dead-end paths 134, as shown in FIG. 1. The dead-end paths 134 may branch off from the main paths 132. In some examples, the machines 104 may be configured to deliver material to drop points 108 closest to the ends of dead-end paths 134 first. This may avoid material being delivered to a drop point that is nearest to an entry into a dead-end path first, which might block access to drop points 108 closer to the ends of the dead-end paths. In some examples in which multiple machines 104 are deployed and some or all of the paths 130 are not wide enough for multiple machines 104 to pass side-by-side on the paths 130, a machine may be instructed to wait within a dead-end path that branches from a main path until another machines that is traveling along the main path passes the branching dead-end path. As described further below, while machines 104 can be instructed wait at dead-end paths 134, machines 104 can also be instructed to wait at intersections between paths 130, at main paths 132, at the staging area 128, and/or at other locations at the worksite 106.

The job parameters 114 can include configurable parameters and/or non-configurable parameters associated with the drop points 108, the staging area 128, the paths 130, the material, the machines 104, and/or the worksite 106. The job parameters 114 can include machine parameters 136 and/or worksite parameters 138, as discussed further below.

The computing system 102 can determine values for the job parameters 114 based on the job design data 112 and/or other data sources, such as databases of machine attributes, costs, and/or other types of data. As described further below, the computing system 102 can have a machine simulator 140 that can perform simulations of operations of machines 104. In some examples, the machine simulator 140 can perform simulations to machine speed values and/or other machine parameters 136, as described further below. The machine simulator 140 can also determine job completion times and/or job completion costs based on the job parameters 114, as described further below.

The machine parameters 136 can be job parameters 114 associated with the machines 104 and/or operations of the machines 104. In some examples, the machine parameters 136 can indicate one or more cost values, based on the job design data 112 and/or other data sources. For example, the machine parameters 136 can indicate how many gallons of fuel each machine consumes per hour on average or based on simulated machine operations, a price per gallon of fuel used by the machines 104, a price per gallon of diesel exhaust fluid (DEF) used to treat emissions of the machines 104, an estimated maintenance cost per hour associated with the machines 104, an estimated repair cost per hour associated with the machines 104, and/or other information that the computing system 102 can use to determine an overall cost of operating the machines 104 at the worksite 106.

The machine parameters 136 can also indicate, based on the job design data 112 and/or other data sources, a maximum amount of material that can be transported by a single machine at a time. For example, if the machines 104 are CTLs and the material is solar panels, the machine parameters 136 may indicate that each CTL can carry one solar panel at a time, two solar panels at a time, or any other maximum number of solar panels at a time.

The machine parameters 136 can also indicate loading times and/or unloading times for each machine. As a non-limiting example, based on the job design data 112, historical information, or other data sources, the machine parameters 136 may indicate that on average each machine will take 35 seconds to load material at the staging area, and 20 seconds to unload material at a drop point.

The machine parameters 136 can also indicate machine speeds. As a non-limiting example, based on the job design data 112, historical information, or other data sources, the machine parameters 136 may indicate that each machine travels five miles per hour on average.

In some examples, machine speeds, loading times, unloading times, and/or other machine parameters 136 can be determined based on simulations performed by the machine simulator 140 using a physics-based model of the machine and/or the worksite 106. For example, the machine simulator 140 may simulate operations of a particular machine during travel through a potential route from the staging area 128 to a particular drop point, based on incline angles and/or other terrain information associated with the potential route, soil densities or other work surface conditions of the worksite 106, the weight of a load that would be carried by the machine from the staging area 128 to the drop point, and/or other factors. Such physics-based simulations can indicate speeds at which the machine would travel during individual portions of the overall route, how long the machine would take to pick up material at the staging area 128, and/or how long the machine would take to drop off material at a drop point associated with the route. Accordingly, rather than machine speeds, operation performance times, and/or other values in the machine parameters 136 being determined based on historical averages or other data, such values can be determined for specific possible routes for machines 104 based on simulations performed by the machine simulator 140.

The worksite parameters 138 can be job parameters 114 associated with the worksite 106 and/or the job that is to be performed at the worksite 106. The computing system 102 can determine values of the worksite parameters 138 based on the job design data 112 and/or other data sources associated with the worksite 106 or the job.

In some examples, the worksite parameters 138 can include, or be based on, a route graph with nodes that represent the drop points 108 and the staging area 128, and edges between the nodes that represent the paths 130. The route graph and/or a corresponding site map can also indicate other worksite parameters 138, such as the number of drop points 108, how much material is to be delivered to each drop point, which nodes of the route graph are drop points 108 and which node is the staging area 128, which edges between nodes of the route graph can be traversed to build a route for a machine from one node to another node via the paths 130, and/or other information about the worksite 106 or the job.

The worksite parameters 138 can also include a path capacity value indicating a maximum number of machines 104 that can traverse points along the paths 130 at the same time. For instance, if the paths 130 are relatively narrow, only one machine may be able to traverse a particular point along the paths 130 at a time, and the path capacity value can be set to one. However, if the paths 130 are wider, two or more machines 104 may be able to travel side-by-side along the paths 130, and the path capacity value can be set to two or more.

The worksite parameters 138 can similarly include a staging area capacity value indicating a maximum number of machines 104 that can be present at, and/or be loaded at, the staging area 128 simultaneously. For instance, if the staging area 128 is relatively small and only one machine at a time can pick up material at the staging area 128, the staging area capacity value can be set to one. However, if multiple machines 104 may be able to be simultaneously present at the staging area 128 to wait and/or pick up material, for instance if the staging area 128 is larger, the staging area capacity value can be set to two or more.

The worksite parameters 138 may also indicate permissible waiting areas for machines 104 at the worksite 106 during performance of the job. If multiple machines 104 are deployed to perform the job, individual machines 104 may at times wait for other machines 104 to complete tasks, to pass through paths 130 or intersections, to depart the staging area, and/or to perform other operations. As discussed above, machines 104 can wait at the staging area 128, at intersections between paths 130, at main paths 132, at dead-end paths 134, and/or at other locations at the worksite 106. Accordingly, the worksite parameters 138 can indicate where on the worksite 106 the machines 104 are allowed to wait, for instance based on information in the job design data 112.

The worksite parameters 138 can also indicate a maximum fleet size. For example, if a customer has ten machines 104 available that can potentially be deployed on the worksite 106 to perform the job, the job design data 112 or other input data can indicate that ten machines 104 are available, and the worksite parameters 138 can be set to indicate a maximum fleet size of ten machines 104. In some examples, the worksite parameters 138 may also indicate a minimum fleet size. The minimum fleet size may be set to one machine by default, but can be configurable based on the job design data 112 or other input data. For example, the job design data 112 may indicate that a customer desires to have at least two machines 104 working on the worksite 106, and the worksite parameters 138 can be set to indicate a minimum fleet size of two machines 104. As described further below, the fleet size selection 116 determined by the computing system 102 can be a value that is equal to the minimum fleet size, equal to the maximum fleet size, or between the minimum fleet size and the maximum fleet size indicated in the worksite parameters 138.

The worksite parameters 138 can indicate one or more candidate dispatch schemes that the computing system 102 can use to determine how and/or when to dispatch one or more machines 104 to perform the job at the worksite 106. As described further below, the dispatch scheme selection 118 determined by the computing system 102 can identify a selected one of the candidate dispatch schemes indicated in the worksite parameters 138.

Some candidate dispatch schemes can be based on fixed sequences. For example, the candidate dispatch schemes can include a fixed sequence that prioritizes machines 104 visiting the farthest drop points from the staging area 128 first, and/or a fixed sequence that prioritizes machines 104 visiting the nearest drop points to the staging area 128 first.

Other candidate dispatch schemes can be dynamic schemes that the computing system 102 can use to select which machines 104 are to be deployed to deliver material to which drop points 108, and/or at what times. Dynamic dispatch schemes may be based on various factors, such as which machines 104 should wait for other machines 104 during overall cycles from the staging area 128 to drop points 108 and back to the staging area 128, or during drop portions of such cycles from the from the staging area 128 to drop points 108. For example, candidate dispatch schemes can include dynamic schemes that prioritize between machines 104 to minimize wait times during overall cycles associated with the farthest drop points 108, the nearest drop points 108, and/or randomly selected drop points 108. As another example, candidate dispatch schemes can include dynamic schemes that prioritize between machines 104 to minimize wait times during drop portions of overall cycles associated with the farthest drop points 108 from the staging area 128, the nearest drop points 108 to the staging area 128, and/or randomly selected drop points 108.

As a non-limiting example, if the computing system 102 is generating possible routes for machines 104, and determines that two machines 104 would reach an intersection of the paths 130 at approximately the same time, the computing system 102 may select either one of the machines 104 to stop and wait for the other machine to travel through the intersection. If the computing system 102 is using a dynamic scheme that prioritizes minimization of wait times during overall cycles associated with the farthest drop points 108, the computing system 102 can prioritize travel of a first machine that is traveling to or from the farthest drop point, and determine that a second machine (that is traveling to or from a nearer drop point) should stop and wait for the first machine to travel through the intersection. However, if the computing system 102 is instead using another dynamic scheme that prioritizes minimization of wait times during overall cycles associated with the nearest drop points 108, the computing system 102 can instead prioritize travel of the second machine that is traveling to or from the nearer drop point, and determine that the first machine (that is traveling to or from the farther drop point) should stop and wait for the second machine to travel through the intersection.

Overall, the job parameters 114 can include machine parameters 136 and/or worksite parameters 138 that the computing system 102 can use to determine job completion times and/or job completion costs for different combinations of allowable fleet sizes and candidate dispatch schemes defined by the worksite parameters 138. For example, for different possible fleet size and dispatch scheme combinations, the machine simulator 140 can perform simulations to determine possible routes for machines 104 to deliver material from the staging area 128 to the drop points 108, costs associated with the machines 104 traversing those routes, and times associated with the machines 104 traversing those routes. The machine simulator 140 can also accordingly determine overall projected job completion times and job completion costs based on the times and costs associated with the individual routes determined for the machines 104.

As a non-limiting example, the machine simulator 140 can be configured to, for a particular candidate fleet size indicating a number of machines 104 and based on a particular candidate dispatch scheme, determine possible routes for the machines 104. The machine simulator 140 can, for instance, use Dijkstra's algorithm, the Bellman-Ford algorithm, or another shortest-path algorithm to find the shortest path between nodes of a graph representing the staging area 128 and a drop point, between nodes representing two drop points 108, or between other nodes representing other locations at the worksite 106.

The nodes representing the endpoints of a candidate route, and/or a sequence of drop points 108 for a machine can, in some examples, be selected for the machine by the machine simulator 140 using the particular candidate dispatch scheme. For example, if the candidate dispatch scheme is a fixed-sequence dispatch scheme, the machine simulator 140 can divide a route graph into a number of regions equal to the candidate fleet size, such that a sum of the distances between the staging area 128 and the drop points 108 of each region is substantially equal. The machine simulator 140 can also determine a sequence of the drop points 108 of a region associated with a machine, for instance within dead-end paths 134 that branch from main paths 132, based on the fixed fixed-sequence dispatch scheme, for example to cause a machine to visit drop points 108 in the farthest or the nearest dead-end paths 134 to the staging area 128 first.

The machine simulator 140 can also simulate machine operations of a machine during traversal of a candidate route, such as a shortest route between nodes, to determine a time and costs associated with the candidate route. For example, based on terrain associated with the candidate route, projected locations of other machines 104 at the worksite 106, worksite parameters 138 such as capacities of paths 130 and/or the staging area 128, and/or other job parameters 114, the machine simulator 140 can determine speeds of the machine through sections of the candidate route, loading times and/or unloading times associated with the candidate route, waiting times associated with the candidate route, and/or other time values for the machine that may indicate an overall time associated with traversal of the candidate route. The machine simulator 140 can also determine departure times, travel times, and/or arrival time associated with each segment of cycle for a candidate route for a machine, for instance for a loading segment in which the machine picks up material at the staging area 128, for one or more loaded travel segments that the machine traverses while loaded with material, for an unloading segment where the machine unloads material at a drop point, for one or more unloaded travel segments that the machine traverses after unloading the material, and/or one or more segments in which the machine waits for another machine to pass by or clear a path before the machine can resume travel. Accordingly, the machine simulator 140 can determine the overall time for a machine to perform operations associated with a cycle for a particular candidate route, based on a combination of projected times associated with a loading segment, loaded travel segments, an unloading segment, unloaded travel segments, and/or waiting segments.

The machine simulator 140 can also project fuel costs, maintenance costs, repair costs, and/or other costs associated with traversal of the candidate route by the machine based on machine simulations and/or corresponding job parameters 114, such that the machine simulator 140 can determine an overall cost associated with traversal of the candidate route by the machine. For example, based on a total of the projected travel and/or operation times associated with a particular machine and a particular candidate route discussed above, the machine simulator 140 can multiply the total route time by hourly maintenance and/or repair costs defined by the job parameters 114. The machine simulator 140 can also estimate fuel and/or DEF consumption levels associated with the machine and the candidate route, and can multiple such consumption levels by the price per gallon of fuel and/or DEF. Accordingly, the machine simulator 140 can determine the overall job completion cost for a machine in association with a particular candidate route, based on a combination of projected maintenance costs, repair costs, fuel costs, and/or DEF costs.

If the candidate fleet size under consideration is more than one, and multiple machines 104 may be traversing paths 130 simultaneously according to candidate paths, the machine simulator 140 can also use the candidate dispatch scheme to determine which machines 104 would wait for other machines 104, where such machines 104 should wait for other machines 104, how long such machines 104 would wait for other machines 104, and/or other impacts on route traversal times and/or costs due to the presence of multiple machines 104. The machine simulator 140 can also determine when individual machines 104 should enter and depart the staging area 128, begin and end traversal of routes, which machines 104 should deliver material to which drop points 108, and/or otherwise determine routes for the number of machines 104 indicated by the candidate fleet size based on the candidate dispatch strategy.

Overall, based on the projected times and costs of multiple candidate routes that would be traversed by the number of machines 104 associated with a candidate fleet size to deliver material to the drop points 108 at the worksite 106 according to a candidate dispatch scheme, the machine simulator 140 can determine an overall job performance time and an overall job cost associated with the combination of the candidate fleet size and the candidate dispatch scheme. The machine simulator 140 can determine such job performance times and job performance costs in association with multiple different possible fleet size and dispatch scheme combinations. For example, for individual candidate dispatch schemes, the machine simulator 140 can determine different job performance times and job performance costs that would result from deploying different numbers of machines 104 associated with different candidate fleet sizes. Similarly, for individual candidate fleet sizes, the machine simulator 140 can determine different job performance times and job performance costs that would result from using different candidate dispatch schemes.

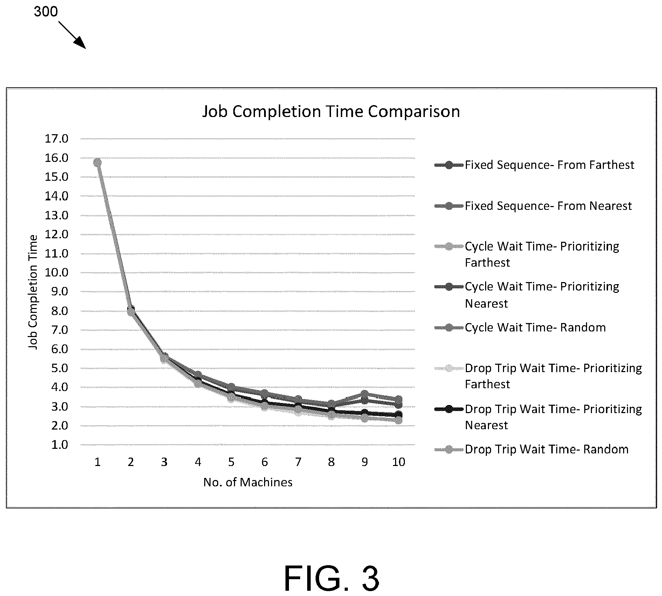

The computing system 102 can also have a fleet optimizer 142 that is configured to select a particular fleet size and dispatch scheme combination, based on the which of the combinations is associated with a projected job performance time and/to a job performance cost that best satisfies the time-cost goal 110. For instance, as discussed above, the machine simulator 140 can determine job performance times and job performance costs for different fleet size and dispatch scheme combinations. The fleet optimizer 142 can compare the job performance times and job performance costs of the different fleet size and dispatch scheme combinations, and identify a particular fleet size and dispatch scheme combination that has a job performance time and a job performance cost that best satisfies the time-cost goal 110. Examples of identifying a particular fleet size and dispatch scheme combination that has a job performance time and a job performance cost that best satisfies the time-cost goal 110 for a job are discussed further below with respect to FIGS. 3-8.

The fleet optimizer 142 can output the fleet size selection 116 and the dispatch scheme selection 118 to indicate the fleet size and the dispatch scheme associated with the fleet size and dispatch scheme combination that has the job performance time and the job performance cost that best meets the time-cost goal 110 for the job. Accordingly, the number of machines 104 indicated by the fleet size selection 116 can be deployed at the worksite 106 to perform the job, and that number of machines 104 can be dispatched to deliver material to the drop points 108 based on the dispatch scheme indicated by the dispatch scheme selection 118.

As an example, as discussed above, the time-cost goal 110 for a job may be based on a lowest time-cost score. Accordingly, the fleet optimizer 142 can determine a time-cost score for each of the fleet size and dispatch scheme combinations, based on the corresponding job performance times and job performance costs, and determine which of the fleet size and dispatch scheme combinations has the lowest time-cost score. The fleet optimizer 142 can accordingly indicate, in the fleet size selection 116, the number of machines 104 associated with the fleet size and dispatch scheme combination that has the lowest time-cost score. The fleet optimizer 142 can similarly accordingly indicate, in the dispatch scheme selection 118, the dispatch scheme associated with the fleet size and dispatch scheme combination that has the lowest time-cost score. In other examples, the fleet optimizer 142 can determine the fleet size selection 116 and/or the dispatch scheme selection 118 based on other metrics, such as a change in time and cost with respect to a fleet size of one machine, and/or a consecutive change in time and cost with respect to smaller fleet sizes.

In some cases, the fleet size selection 116 may indicate a fleet size that is less than the maximum fleet size indicated in the worksite parameters 138. As a non-limiting example, although a customer may have ten machines 104 available to perform a job at the worksite 106, the computing system 102 may determine that deploying all ten machines 104 would increase costs, and/or increase the overall time to complete the job, due to simulations indicating that some of the ten machines 104 would be blocked by other machines 104 on the paths 130 during performance of the job. Accordingly, in this example, the computing system 102 may determine that deploying less than the maximum number of machines 104 would result in the job being completed more quickly and/or at a lower cost, relative to deploying the maximum number of machines 104.

The computing system 102 can, in some examples, be configured to determine the fleet size selection 116 and the dispatch scheme selection 118 for a job prior to a beginning of the job at the worksite 106. For example, an owner or operator of a fleet of machines 104 can use the computing system 102 to determine the fleet size selection 116 and the dispatch scheme selection 118 for a job, in order to determine cost and/or time attributes for a bid to perform the job. As another example, an owner or operator of a fleet of machines 104 that will perform a job can use the computing system 102 during initial planning of the job determine the fleet size selection 116 and the dispatch scheme selection 118 to use to perform the job.

In other examples, the computing system 102 can determine the fleet size selection 116 and the dispatch scheme selection 118 for a job in real-time during performance of the job. As an example, if performance of the job by one or more machines 104 has already begun according to a previously-determined fleet size selection 116 and dispatch scheme selection 118, but a machine breaks down or an obstacle is determined to block one of the paths 130, the computing system 102 can use updated job parameters 114 reflecting the new state of the fleet and/or the worksite 106 to determine new or updated fleet size selections and dispatch scheme selections. For instance, if a machine breaks down during performance of the job, a user can lower the maximum fleet size indicated in the worksite parameters 138 to the number of machines 104 that are still available on-site at the worksite 106, and the computing system 102 can use the operations described herein to determine a new fleet size selection and a new dispatch scheme selection that can be used to deliver material to drop points that have not yet received material. The computing system 102 can also generate corresponding new machine instructions based on the updated job parameters 114, and can transmit the new machine instructions to corresponding machines.

In some examples, as the machine simulator 140 is performing simulations associated with candidate routes for a particular candidate number of machines 104 according to a particular candidate dispatch scheme, the machine simulator 140 and/or other elements of the computing system 102 can determine machine instructions 120 that correspond to the candidate routes. For example, as discussed above, the machine simulator 140 may perform simulations to determine machine speeds and/or machine operations during traversal of segments of a candidate route by a machine, including when the machine will depart the staging area 128, arrive at drop points 108, wait on paths 130, and/or perform other operations. The computing system 102 can save information associated with the determined machine speeds, route segment times, and/or other machine operations as candidate machine instructions 120 for the machine. If the computing system 102 ultimately determines that the machine should traverse that candidate route, the computing system 102 can provide the corresponding saved machine instructions 120 to the ECM 122 of the machine. Accordingly, the ECM 122 of the machine can follow the machine instructions 120 to cause the machine to autonomously, or semi-autonomously, traverse the route at times, and/or using operations, that substantially match the machine operations that were simulated by the machine simulator 140.

For example, as described herein, the machine simulator 140 may simulate routes associated with multiple possible fleet size and dispatch scheme combinations. The machine simulator 140 can accordingly generate multiple different sets of candidate machine instructions 120 during such simulations. The computing system 102 can store, in memory, the different sets of candidate machine instructions 120 generated during the simulations performed by the machine simulator 140. When the fleet optimizer 142 ultimately selects the fleet size selection 116 and the dispatch scheme selection 118 associated with the fleet size and dispatch scheme combination that best satisfies the time-cost goal 110, the computing system 102 can retrieve, from the memory, the saved machine instructions 120 for the machines 104 that correspond to the fleet size and dispatch scheme combination that best satisfies the time-cost goal 110. The computing system 102 can accordingly transmit the machine instructions 120 to a number of machines 104 corresponding to the fleet size selection 116. The machine instructions 120 can cause the machines 104 to autonomously, or semi-autonomously, operate according to the machine instructions 120 that correspond to the fleet size selection 116 and the dispatch scheme selection 118.

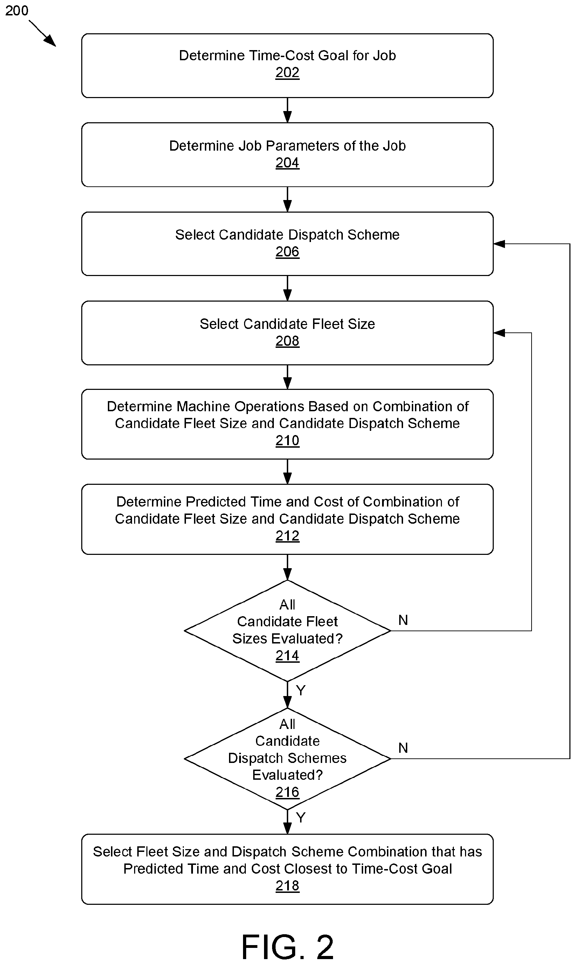

FIG. 2 shows a flowchart 200 illustrating an example process for identifying a fleet size and dispatch scheme combination that best satisfies the time-cost goal 110 associated with a job at the worksite 106. The operations shown in FIG. 2 can be performed by the computing system 102. FIG. 9, discussed further below, describes an example system architecture for the computing system 102.

At block 202, the computing system 102 can determine the time-cost goal 110 for the job. As discussed above, the time-cost goal 110 can be a customer-specified goal that weights time metrics and cost metrics equally, weights time metrics more heavily than cost metrics, or that weights time metrics less heavily than cost metrics.

At block 204, the computing system 102 can determine the job parameters 114 associated with the job. The job parameters 114 can include machine parameters 136, such as fuel consumption rates associated with the machines 104, a price per unit of fuel consumed by the machines 104, DEF consumption rates associated with the machines 104, a price per unit of DEF consumed by the machines 104, maximum amounts of material the machines 104 can carry, loading times associated with the machines 104, unloading times associated with the machines 104, and/or average or simulated speeds of the machines 104. The job parameters 114 can also include worksite parameters 138, such as locations of areas of the worksite 106, path capacity values associated with paths 130, a staging area capacity value associated with the staging area 128, permissible waiting areas at the worksite 106, maximum and/or minimum fleet sizes, candidate dispatch schemes, and/or other worksite parameters 138. For example, the computing system 102 can receive the job design data 112 associated with the job, and/or access machine attribute databases or other data sources, and use such data to determine the machine parameters 136, worksite parameters 138, and/or other job parameters 114 associated with the job.

At block 206, the computing system 102 can select a particular candidate dispatch scheme. As described above, the job parameters 114 may identify a set of candidate dispatch schemes that could be used to dispatch one or more machines 104 to perform the job at the worksite 106. Accordingly, the computing system 102 can select one of the possible candidate dispatch schemes at block 206. As described further below, the computing system 102 can select a different candidate dispatch scheme during each iteration through block 206. For example, the computing system 102 can select a first candidate dispatch scheme during a first iteration through block 206, and select a different candidate dispatch scheme during each subsequent iteration through block 206.

At block 208, the computing system 102 can select a particular candidate fleet size to consider in association with the candidate dispatch scheme selected at block 206. As described above, the job parameters 114 may identify a minimum fleet size and a maximum fleet size. Accordingly, at block 208 the computing system 102 can select one of the possible candidate fleet sizes that is equal to the minimum fleet size, is between the minimum fleet size and the maximum fleet size, or is equal to the maximum fleet size. As described further below, the computing system 102 can select a different fleet size during each iteration through block 208. For example, the computing system 102 can select the minimum fleet size during a first iteration through block 208, and increment the selected candidate fleet size during each subsequent iteration through block 208.

After selecting a particular candidate dispatch scheme at block 206 and selecting a particular candidate fleet size at block 208, the computing system 102 can be configured to evaluate a particular fleet size and dispatch scheme combination that corresponds to the selected candidate fleet size and the selected candidate dispatch scheme. Accordingly, at block 210, the computing system 102 can determine machine operations based on the particular combination of the candidate fleet size and the candidate dispatch scheme. For example, at block 210 the computing system 102 can use the selected candidate dispatch scheme to determine routes and/or machine operations, for a number of machines 104 corresponding to the selected candidate fleet size, that would allow the machines 104 to perform the job at the worksite 106 by delivering material from the staging area 128 to the drop points 108. In some examples, the routes and/or machine operations determined at block 210 can be based at least in part on machine simulations, drop point allocations, route segment scheduling operations, and/or other operations performed by the computing system 102 according to the particular fleet size and dispatch scheme combination.

At block 212, the computing system 102 can determine a predicted time and a predicted cost to complete the job according to the routes and/or machine operations determined at block 210 based on the particular fleet size and dispatch scheme combination being considered by the computing system 102. For example, the computing system 102 can perform physics-based simulations of one or more machines 104 in association with the routes and/or machine operations determined at block 210, in order to determine how long the machines 104 would take to perform the job, and a corresponding cost for the machines 104 to perform the job, based on the particular fleet size and dispatch scheme combination.

In some examples, the computing system 102 can generate machine instructions 120 associated with the particular fleet size and dispatch scheme combination based on the simulations performed at block 210 and/or block 212. The computing system 102 can save the generated machine instructions 120 in association with the particular fleet size and dispatch scheme combination, such that the generated machine instructions 120 can later be used if and/or when the particular fleet size and dispatch scheme combination is selected for the job.

At block 214, after the computing system 102 has determined a predicted time and a predicted cost associated with a particular combination of a currently-selected candidate fleet size and a currently-selected candidate dispatch scheme, the computing system 102 can determine whether all of the possible candidate fleet sizes have been evaluated in association with the currently-selected candidate dispatch scheme. If not all of the candidate fleet sizes have been evaluated in association with the currently-selected candidate dispatch scheme (Block 214 - No), the computing system 102 can return to block 208 to select a different candidate fleet size. Accordingly, the computing system 102 can iterate through blocks 208-212 again to select a different candidate fleet size, determine machine operations based on a combination of the newly-selected candidate fleet size and the currently-selected candidate dispatch scheme, and determine a predicted time and predicted cost associated with a combination of the newly-selected candidate fleet size and the currently-selected candidate dispatch scheme. Accordingly, the computing system 102 can iterate through blocks 208-212 until all of the candidate fleet sizes have been evaluated in association with the currently-selected candidate dispatch scheme.

After the computing system 102 has evaluated all of the candidate fleet sizes in association with the currently-selected candidate dispatch scheme (Block 214 - Yes), the computing system 102 can determine at block 216 whether the computing system 102 has evaluated all of the candidate dispatch schemes. If computing system 102 has not yet evaluated all of the candidate dispatch schemes (Block 216 - No), the computing system 102 can return to block 206 to select a different candidate dispatch scheme. The computing system 102 can also iterate again through blocks 208-212 to select different candidate fleet sizes in association with the newly-selected candidate dispatch scheme, determine machine operations based on combinations of the different candidate fleet sizes and the newly-selected candidate dispatch scheme, and determine predicted times and predicted costs associated with combinations of the different fleet sizes and the newly-selected candidate dispatch scheme.

Accordingly, overall, the computing system 102 can iterate through blocks 206-212 until the computing system 102 has determined predicted times and costs associated with all of the possible combinations of candidate fleet sizes and candidate dispatch schemes permitted by the job parameters 114. In the example shown in FIG. 2, the computing system 102 can first select a candidate dispatch scheme, then evaluate all of the possible candidate fleet sizes in association with the selected candidate dispatch scheme, and then repeat the process for a different candidate scheme until predicted times and costs associated with all of the possible fleet size and dispatch scheme combinations have been determined. However, in other examples, the computing system 102 can instead first select a candidate fleet size, then evaluate all of the candidate dispatch schemes in association with the selected candidate fleet size, and then repeat the process for a different candidate fleet size until predicted times and costs associated with all of the possible fleet size and dispatch scheme combinations have been determined.

After the computing system 102 has evaluated all of the candidate dispatch schemes in combination with all of the candidate fleet sizes (Block 216 - Yes), the computing system 102 can have determined predicted times and costs associated with all of the fleet size and dispatch scheme combinations permitted based on the job parameters 114. Accordingly, the computing system 102 can determine which of the predicted times and costs associated with all of the possible fleet size and dispatch scheme combinations best satisfies the time-cost goal 110 determined at block 202.

For example, if the time-cost goal 110 is based on minimizing a time-cost score associated with the job, the computing system 102 can use the predicted times and costs associated with the different fleet size and dispatch scheme combinations to determine time-cost scores associated with the different fleet size and dispatch scheme combinations. As discussed above, in some examples the time-cost score associated with a particular fleet size and dispatch scheme combination can be a normalized sum of a projected job completion time and a projected job cost associated with the particular fleet size and dispatch scheme combination. Accordingly, the computing system 102 can determine the time-cost scores for each of the possible fleet size and dispatch scheme combinations, and determine which of the fleet size and dispatch scheme combinations is associated with the lowest time-cost score and is therefore likely to best satisfy the time-cost goal 110 for the job.

In other examples, the computing system 102 can determine curves of one or more metrics, such as changes in time and cost with respect to using *N* machines, relative to 1 machine and/or *N*-1 machines. The computing system 102 can also perform an elbow analysis of such curves to identify a knee point of the curves. The knee point of such a curve can indicate an optimal number of machines, as variations of time and/or costs associated with larger numbers of machines may be relatively minimal. Accordingly, the computing system 102 can determine at least the fleet size selection 116 that best satisfies the time-cost goal 110 based on the knee point of such metrics.

At block 218, the computing system 102 can select the fleet size and dispatch scheme combination that is associated with a predicted time and a predicted cost that is closest to the time-cost goal. For example, the computing system 102 can select the fleet size and dispatch scheme combination that is associated with the lowest time-cost score, as discussed above. In other examples, the computing system 102 can use an elbow analysis to first determine the fleet size selection 116 based on a knee point of a curve that indicates an optimal number of machines, and then determine which of the candidate fleet sizes is projected to result in the lowest time-cost score associated with that optimal number of machines. The computing system 102 can accordingly indicate, in the fleet size selection 116, the fleet size associated with the fleet size and dispatch scheme combination selected at block 218. The computing system 102 can also accordingly indicate, in the dispatch scheme selection 118, the dispatch scheme associated with the fleet size and dispatch scheme combination selected at block 218.

In some examples, the computing system 102 may also output machine instructions 120 that were generated during simulations performed at block 210 and/or block 212 in association with the fleet size and dispatch scheme combination that is ultimately selected at block 218. For example, the computing system 102 can transmit the machine instructions 120 corresponding to the selected fleet size and dispatch scheme combination to one or more machines 104, such that ECMs of the machines 104 can follow the machine instructions 120 to autonomously or semi-autonomously operate the machines 104. The machine instructions 120 can, for example, cause a number of machines 104 indicated by the fleet size selection 116 to autonomously perform the job at the worksite 106 by traveling along routes and/or performing operations determined by the computing system 102 according to the selected dispatch scheme.

Overall, the computing system 102 can use the process shown in FIG. 2 to identify which of the possible fleet size and dispatch scheme combinations is associated with a predicted time and a predicted cost that best satisfies the time-cost goal 110 for the job. FIGS. 3-8, discussed further below, show example show charts of time and/or cost metrics associated with possible fleet size and dispatch scheme combinations that can be used by the computing system 102 to determine which possible fleet size and dispatch scheme combination best satisfies the time-cost goal 110 for a job.

The example analysis discussed in association with FIGS. 3-8 considers ten different candidate fleet sizes to deploy to perform the job, from a minimum fleet size of one machine to a maximum fleet size of ten machines 104. The example analysis discussed in association with FIGS. 3-8 also considers each of the ten different candidate fleet sizes in association with eight different candidate dispatch schemes. Although FIGS. 3-8 are associated with a particular example in which combinations of ten different candidate fleet sizes and eight candidate dispatch schemes are considered with respect to example job parameters 114, the computing system 102 can consider other examples in which allowable fleet sizes, the types of candidate dispatch schemes, the number of candidate dispatch schemes, and/or values of one or more job parameters 114 may differ.

FIG. 3 shows an example job completion time graph 300 that displays job completion times associated with multiple possible fleet size and dispatch scheme combinations. The computing system 102 can determine the job completion times shown in the example job completion time graph 300 based on a job design file and/or job parameters 114 associated with a job at a worksite, for instance by determining routes and performing corresponding machine simulations for individual fleet size and dispatch scheme combinations, as discussed above with respect to FIG. 1 and FIG. 2. As shown in the example job completion time graph 300, the overall job completion time can be projected to generally decrease if more machines 104 are used to perform the job. However, for fleet sizes of nine and ten machines 104, the use of some candidate dispatch schemes may be projected to result in an increase in the overall job completion time relative to using those candidate dispatch schemes with smaller fleet sizes, and/or relative to using the same fleet sizes with other candidate dispatch schemes, as shown in FIG. 3.

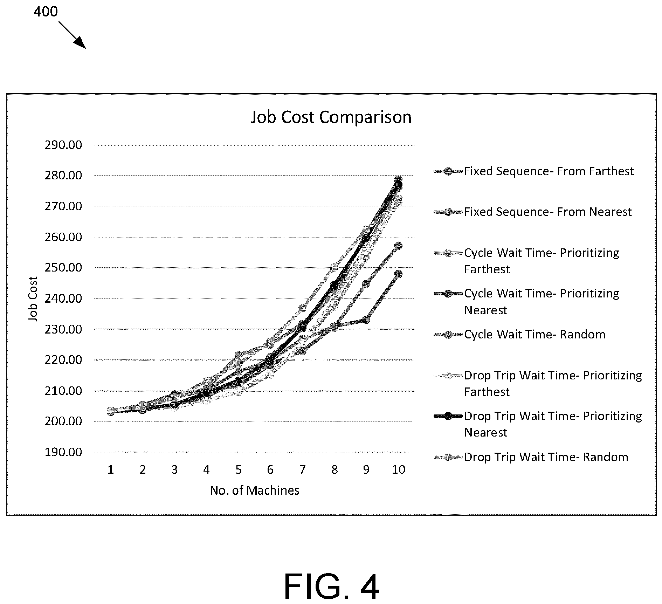

FIG. 4 shows an example job cost graph 400 that displays job costs associated with multiple possible fleet size and dispatch scheme combinations. The computing system 102 can determine the job costs shown in the example job cost graph 400 based on the job design file and/or job parameters 114 associated with the job at the worksite, for instance by determining routes and performing corresponding machine simulations for individual fleet size and dispatch scheme combinations, as discussed above with respect to FIG. 1 and FIG. 2. As shown in the example job cost graph 400, the overall cost to complete the job may be projected to generally increase if more machines 104 are used to perform the job. However, if a particular fleet size is used, some dispatch schemes may be projected to result in lower job costs than other dispatch schemes, as shown in FIG. 4.

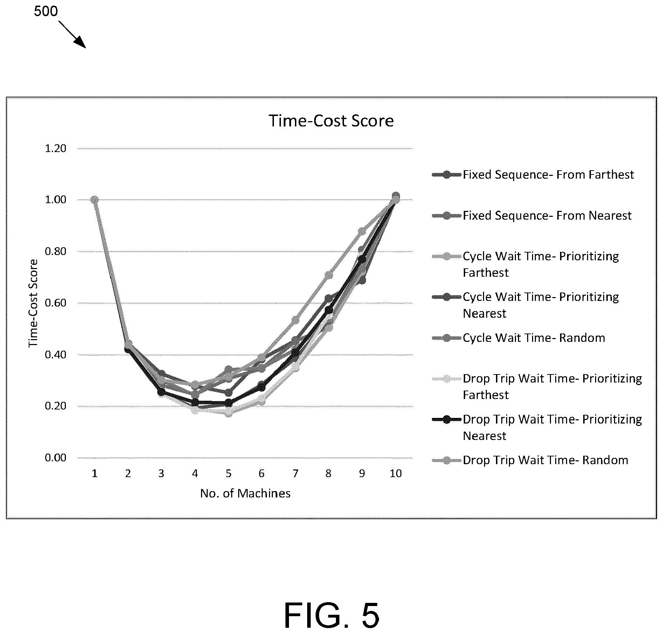

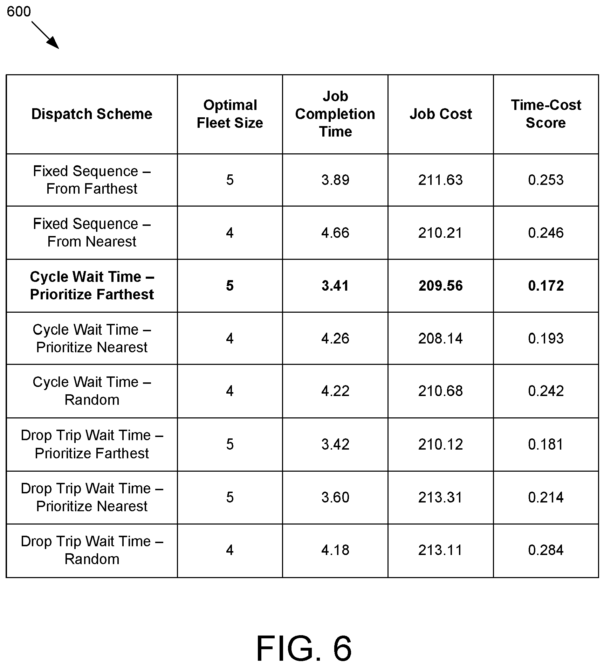

FIG. 5 shows an example time-cost score graph 500 that displays time-cost scores associated with multiple possible fleet size and dispatch scheme combinations. The time-cost score for a particular fleet size and dispatch scheme combination can be a normalized sum of the job completion time for the particular fleet size and dispatch scheme combination shown in the example job completion time graph 300 of FIG. 3, and the job cost for the particular fleet size and dispatch scheme combination shown in the example job cost graph 400 of FIG. 4. As discussed above, the example job completion time graph 300 of FIG. 3 shows that job completion times are projected to generally decrease with each additional machine, but the example job cost graph 400 of FIG. 4 shows that job costs are projected to generally increase with each additional machine. However, the example time-cost score graph 500 shows that an overall balance of job completion times and job costs can be lowest if more than the minimum number of machines 104 is used, but less than the maximum number of machines 104 is used. An example of specific time-cost scores and other values associated with the example job completion time graph 300, the example job cost graph 400, and the example time-cost score graph 500 is discussed below with respect to FIG. 6.

FIG. 6 shows an example table 600 that indicates, for each candidate dispatch scheme shown in the example job completion time graph 300, the example job cost graph 400, and the example time-cost score graph 500, an optimal fleet size that leads to the lowest time-cost score for each of the candidate dispatch schemes. The example table 600 also shows a job completion time, a job cost, and a time-cost score that corresponds to each dispatch scheme and the optimal fleet size for that dispatch scheme.

As discussed above, in some examples, the time-cost goal 110 for a job may be based on identifying a fleet size and dispatch scheme combination that minimizes a time-cost score, in order to balance both a job completion time and a job cost associated with the job overall. As shown in the example time-cost score graph 500 and the example table 600, in this example a fleet size of five machines 104, used with a "cycle wait time - prioritizing farthest" dispatch scheme, has the lowest overall time-cost score. Accordingly, for this example, the computing system 102 can indicate in the fleet size selection 116 that five machines 104 should be used to perform the job, and indicate in the dispatch scheme selection 118 that the "cycle wait time - prioritizing farthest" should be used to dispatch the five machines 104 to perform the job.

In some examples, the computing system 102 can have generated candidate machine instructions 120 associated with a combination of five machines 104 and the "cycle wait time - prioritizing farthest" dispatch scheme while performing route planning operations and/or machine simulations to determine the job completion time and job cost associated with that fleet size and dispatch scheme combination. Accordingly, the computing system 102 can retrieve the previously-generated machine instructions 120 corresponding to the combination of five machines 104 and the "cycle wait time - prioritizing farthest" dispatch scheme, and can transmit the machine instructions 120 to the five machines 104. The machine instructions 120 can cause the ECMs of the five machines 104 to perform corresponding machine operations autonomously, or semi-autonomously, such that the five machines 104 can perform the job over a time, and at a cost, the corresponds to the job completion time and the job cost determined by the computing system 102 to best meet the customer-specified time-cost goal 110 for the job.

Accordingly, in some examples, the computing system 102 can be configured to determine the fleet size selection 116 and the dispatch scheme selection 118 based on identifying which fleet size and dispatch scheme combination that minimizes a time-cost score overall in some examples. However, in other examples the computing system 102 can be configured to use an elbow analysis on a curve that shows values of other types of metrics in order to first determine the fleet size selection 116, and then use time-cost scores associated with that fleet size selection 116 to determine the dispatch scheme selection.

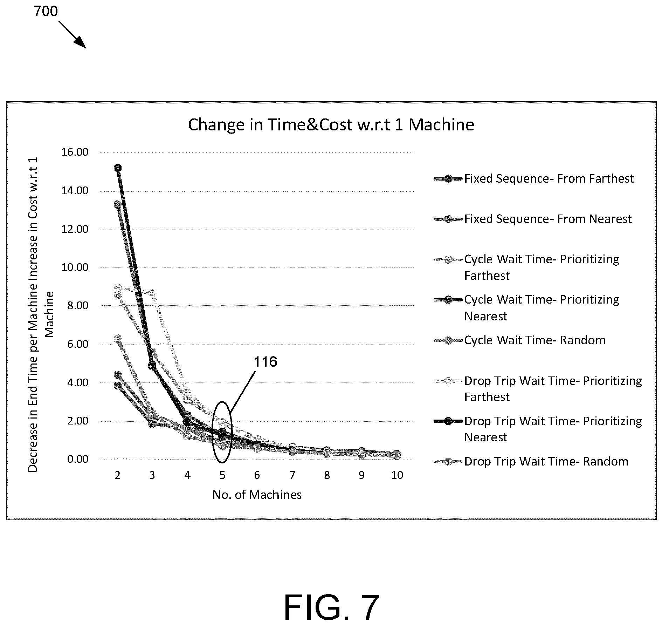

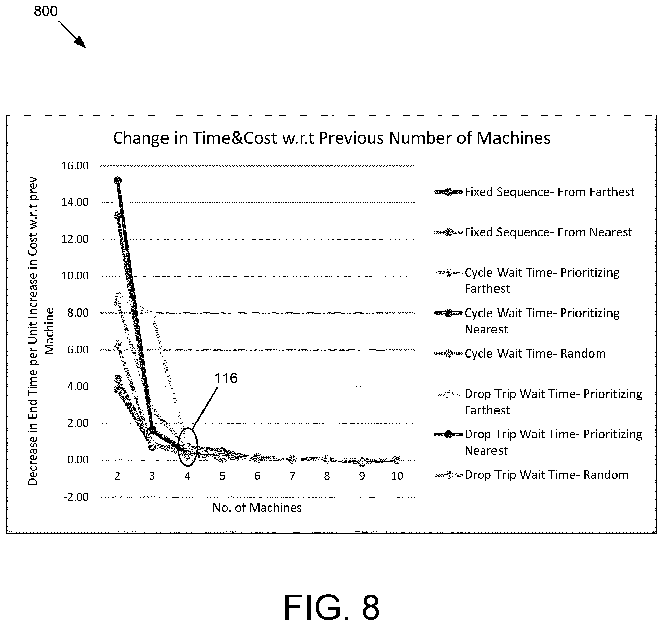

For example, FIG. 7 shows first example curves 700 that show changes, for different fleet size and dispatch scheme combinations, in time and cost relative to a fleet size of one machine. As another example, FIG. 8 shows a second example curves 800 that show changes, for different fleet size and dispatch scheme combinations, in time and cost relative to a fleet size of one fewer machine. As discussed above, the computing system 102 can perform an elbow analysis to identify knee point of curves, such as curves 700 or curves 800. In some examples, the computing system 102 can similarly perform an elbow analysis to identify knee points of curves shown in the time-cost score graph 500 shown in FIG. 5. The knee point of the curves can indicate an optimal number of machines, based on the corresponding metric, that the computing system 102 can use as the fleet size selection 116. For example, if the computing system 102 is configured to use curves 700, the computing system 102 can determine that five machines is to be used as the fleet size selection. However, if the computing system 102 is configured to use curves 800, the computing system 102 can determine that four machines is to be used as the fleet size selection. After determining the fleet size selection 116 based on identifying knee points of curves, the computing system 102 can also identify which candidate dispatch scheme results in the lowest time-cost score when the candidate dispatch scheme is used with the fleet size selection 116, and accordingly use that candidate dispatch scheme as the dispatch scheme selection 118.

FIG. 9 shows an example system architecture 900 for the computing system 102. In some examples, other computing systems described herein, such as the ECM 122 or other on-board computing systems of a machine, can have a system architecture that is similar to the system architecture shown in FIG. 9. The computing system 102 can include one or more servers or other computing devices that include one or more processors 902, memory 904, and communication interfaces 906.

The processor(s) 902 can operate to perform a variety of functions as set forth herein. The processor(s) 902 can include one or more chips, microprocessors, application specific integrated circuits (ASICs), field programmable gate arrays (FPGAs) and/or other programmable circuits, central processing units (CPUs), graphics processing units (GPUs), digital signal processors (DSPs), and/or other processing units or components known in the art. In some examples, the processor(s) 902 can have one or more arithmetic logic units (ALUs) that perform arithmetic and logical operations, and/or one or more control units (CUs) that extract instructions and stored content from processor cache memory, and executes such instructions by calling on the ALUs during program execution. The processor(s) 902 can also access content and computer-executable instructions stored in the memory 904, and execute such computer-executable instructions.

The memory 904 can be volatile and/or non-volatile computer-readable media including integrated or removable memory devices including random-access memory (RAM), read-only memory (ROM), flash memory, a hard drive or other disk drives, a memory card, optical storage, magnetic storage, and/or any other computer-readable media. The computer-readable media can be non-transitory computer-readable media. The computer-readable media can be configured to store computer-executable instructions that can be executed by the processor(s) 902 to perform the operations described herein.

For example, the memory 904 can include a drive unit and/or other elements that include machine-readable media. A machine-readable medium can store one or more sets of instructions, such as software or firmware, that embodies any one or more of the methodologies or functions described herein. The instructions can also reside, completely or at least partially, within the processor(s) 902 and/or communication interface(s) 906 during execution thereof by the computing system 102. For example, the processor(s) 902 can possess local memory, which also can store program modules, program data, and/or one or more operating systems.

The memory 904 can store data and/or computer-executable instructions associated with the time-cost goal 110, the job design data 112, the job parameters 114, the machine simulator 140, the fleet optimizer 142, and/or other elements described herein. The memory 904 can also store other modules and data 908 that can be utilized by the computing system 102 to perform or enable performing any action taken by the computing system 102. For example, the other modules and data 908 can include a platform, operating system, and/or applications, as well as data utilized by the platform, operating system, and/or applications.

The communication interfaces 906 can include transceivers, modems, interfaces, antennas, and/or other components that can transmit and/or receive data over networks or other data connections. In some examples, the communication interfaces 906 can be wireless communication interfaces that the computing system 102 can use to send machine instructions 120 to the machines 104.

### Industrial Applicability

As described above, the computing system 102 can determine projected job completion times and job completion costs associated with multiple combinations of candidate fleet sizes and candidate dispatch schemes that could be used to perform a job at the worksite 106. The computing system 102 can also use the projected job completion times and job completion costs, associated with the fleet size and dispatch scheme combinations, to find a single fleet size and dispatch scheme combination that best satisfies a time-cost goal that balances minimizing the overall job completion time with minimizing the overall job completion cost.

Other systems may be able to determine a fleet size and/or dispatch scheme that could complete a job most quickly, even if that fleet size and/or dispatch scheme might ultimately be more expensive than other fleet sizes and/or dispatch schemes. Similarly, other systems may be able to determine a fleet size and/or dispatch scheme that could complete the job at the lowest cost, even if that fleet size and/or dispatch scheme might ultimately lead to longer job completion times. However, the computing system 102 described herein can select fleet size and dispatch scheme that, when used together, would result in an overall balance of a projected job completion time with a projected job completion cost and may therefore best satisfy an overall time-cost goal for the job.

Moreover, the computing system 102 described herein can generate machine instructions 120 for machines 104 during other operations to determine the fleet size and dispatch scheme combination that best satisfies the time-cost goal for the job. The computing system 102 can provide the already-generated machine instructions 120 that correspond to the ultimately-selected fleet size and dispatch scheme combination to the machines 104 that are selected to perform the job at the worksite 106. Accordingly, because such machine instructions 120 were already selected, the computing system 102 and/or other computing systems can avoid using processor cycles, memory, and/or other computing resources to re-generate or re-create the machine instructions 120 at a later point in time after the fleet size selection 116 and/or the dispatch scheme selection 118 are determined.

While aspects of the present disclosure have been particularly shown and described with reference to the embodiments above, it will be understood by those skilled in the art that various additional embodiments may be contemplated by the modification of the disclosed machines, systems, and method without departing from the spirit and scope of what is disclosed. Such embodiments should be understood to fall within the scope of the present disclosure as determined based upon the claims and any equivalents thereof.

## Claims

1. A method comprising:
determining, by a processor (902), a time-cost goal (110) for a job at a worksite (106), wherein performance of the job is associated with one or more machines (104) delivering material to a plurality of drop points (108) at the worksite (106);
determining, by the processor (902), job parameters (114) associated with the job, wherein the job parameters (114) indicate:
locations of the plurality of drop points (108) at the worksite (106),
candidate fleet sizes indicating numbers of machines (104), and
candidate dispatch schemes for deploying the one or more machines (104) to deliver the material to the plurality of drop points (108);
determining, by the processor (902), projected job performance times and projected job performance costs associated with different combinations of the candidate fleet sizes and the candidate dispatch schemes;
identifying, by the processor (902), and from among the different combinations of the candidate fleet sizes and the candidate dispatch schemes, a particular combination of a fleet size and a dispatch scheme that is associated with a projected job performance time and a projected job performance cost that is closest to satisfying the time-cost goal (110); and
determining, by the processor (902), a fleet size selection (116) and a dispatch scheme selection (118) that respectively indicate the fleet size and the dispatch scheme associated with the particular combination of the fleet size and the dispatch scheme.

2. The method of claim 1, wherein for a combination of a particular candidate fleet size and a particular candidate dispatch scheme, determining the projected job performance times and the projected job performance costs comprises:
determining routes, by the processor (902), for a set of machines (104) corresponding to the particular candidate fleet size, between a staging area (128) and the plurality of drop points (108), based on the particular candidate dispatch scheme;
generating, by the processor (902), simulated machine operations associated with individual machines (104), from the set of machines (104), in association with the routes;
determining, by the processor (902), a job performance time by determining a total time for the set of machines (104) to perform the simulated machine operations; and
determining, by the processor (902), a job performance cost by determining a total cost for the set of machines (104) to perform the simulated machine operations.

3. The method of claim 2, wherein:
the machines (104) are autonomous machines, and wherein
generating the simulated machine operations comprises generating a set of machine instructions (120) for the autonomous machines that indicates times and locations for individual machine operations, to be performed at the worksite (106) by individual autonomous machines, corresponding to the simulated machine operations.

4. The method of claim 1, wherein the job parameters comprise at least one of:
a route graph having nodes corresponding to the plurality of drop points (108),
machine parameters (136) associated with the one or more machines (104), or
worksite parameters (138) associated with the worksite (106) or the job.

5. The method of claim 1, wherein the worksite (106) is a solar farm under construction, the material comprises at least one of solar panels and solar panel installation equipment, and the plurality of drop points (108) are delivery locations at the solar farm for dropping off the at least at least one of the solar panels and the solar panel installation equipment.

6. A computing system (102) comprising:
a processor (902); and
a memory (904) storing computer-executable instructions that, when executed by the processor (902), cause the processor (902) to:
determine a time-cost goal (110) for a job at a worksite (106), wherein performance of the job is associated with one or more machines (104) delivering material to a plurality of drop points (108) at the worksite (106);
determine job parameters (114) associated with the job, wherein the job parameters indicate:
locations of the plurality of drop points (108) at the worksite (106),
candidate fleet sizes indicating numbers of machines (104), and
candidate dispatch schemes for deploying the one or more machines (104) to deliver the material to the plurality of drop points (108);
for individual combinations of the candidate fleet sizes and the candidate dispatch schemes:
determine routes, for a set of machines (104) corresponding to a particular candidate fleet size, between a staging area (128) and the plurality of drop points (108), based on a particular candidate dispatch scheme;
generate simulated machine operations associated with individual machines (104), of the set of machines (104), in association with the routes;
determine a job performance time by determining a total time for the set of machines (104) to perform the simulated machine operations; and
determine a job performance cost by determining a total cost for the set of machines (104) to perform the simulated machine operations; and
identify a particular combination of a fleet size and a dispatch scheme that is associated with the job performance time and the job performance cost that is closest to satisfying the time-cost goal (110).

7. The computing system (102) of claim 6, wherein:
the machines (104) are autonomous machines, and wherein
the processor (902) generates the simulated machine operations as a set of machine instructions (120) for the autonomous machines that indicates times and locations for individual machine operations, to be performed at the worksite (106) by individual autonomous machines, corresponding to the simulated machine operations.

8. The computing system of claim 6, wherein at least one of the job parameters (114) determined by the processor (902) comprises a route graph having nodes corresponding to the plurality of drop points (108).

9. The computing system (102) of claim 6, wherein the processor (902) identifies the particular combination of the fleet size and the dispatch scheme that is associated with the job performance time and the job performance cost that is closest to satisfying the time-cost goal (110) by:
based on job performance times and job performance costs associated with the individual combinations of the candidate fleet sizes and the candidate dispatch schemes, determining time-cost scores associated with the individual combinations of the candidate fleet sizes and the candidate dispatch schemes, and
identifying the particular combination of the fleet size and the dispatch scheme associated with a lowest time-cost score,
wherein a time-cost score for an individual combination of a candidate fleet size and a candidate dispatch scheme is a normalized sum of the job performance time and the job performance cost associated with the individual combination.

10. The computing system (102) of claim 6, wherein the processor (902) identifies the particular combination of the fleet size and the dispatch scheme that is associated with the job performance time and the job performance cost that is closest to satisfying the time-cost goal (110) by:
based on job performance times and job performance costs associated with the individual combinations of the candidate fleet sizes and the candidate dispatch schemes, determining curves (700, 800) of at least one of:
first changes in the job performance times and the job performance costs, for each of the candidate fleet sizes larger than a fleet size of one machine (104), relative to the fleet size of one machine (104), and
second changes in the job performance times and the job performance costs, for each of the candidate fleet sizes larger than the fleet size of one machine (104), relative to fleet sizes of one fewer machine (104) than each of the candidate fleet sizes larger than the fleet size of one machine (104);
identifying a knee point of each of the curves (700, 800), based on an elbow analysis of the curves (700, 800) of the at least one of the first changes and the second changes; and
determining at least the fleet size, of the particular combination of the fleet size and the dispatch scheme, based on the knee point.
